(19) Europäisches Patentamt / European Patent Office / Office européen des brevets

(11) **EP 3 936 885 A2**

(12) **EUROPEAN PATENT APPLICATION**

(43) Date of publication:
**12.01.2022 Bulletin 2022/02**

(51) Int Cl.:
**G01S 7/40** *(2006.01)* **G01S 13/66** *(2006.01)*
**G01S 13/931** *(2020.01)*

(21) Application number: **21205414.2**

(22) Date of filing: **28.10.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2020 CN 202011573296**

(71) Applicant: **Apollo Intelligent Connectivity (Beijing)
Technology Co., Ltd.
Beijing 100176 (CN)**

(72) Inventor: **YI, Guangqi
BEIJING (CN)**

(74) Representative: **Bittner, Bernhard
Hannke Bittner & Partner
Patent- und Rechtsanwälte mbB
Prüfeninger Strasse 1
93049 Regensburg (DE)**

(54) **RADAR CALIBRATION METHOD, APPARATUS, STORAGE MEDIUM, AND PROGRAM PRODUCT**

(57)    A radar calibration method and apparatus, a storage medium and a computer program product are provided, which are related to the field of intelligent transportation. The method includes acquiring (S102) reference position information respectively corresponding to M reference objects collected by a radar in a coordinate system of the radar within a preset time length, wherein M is an integer greater than or equal to 1; determining (S102) N pieces of track information based on the reference position information respectively corresponding to the M reference objects, wherein N is an integer greater than or equal to 1; and determining (S103) a calibration parameter of the radar based on the N pieces of track information and relevant information of a high-precision map, wherein the calibration parameter of the radar is used for representing a transformation relation between the coordinate system of the radar and a target coordinate system.

FIG.1

EP 3 936 885 A2

**Description**

**TECHNICAL FIELD**

The present disclosure relates to the field of data processing, in particular to the field of intelligent transportation.

**BACKGROUND**

Under a vehicle-infrastructure cooperative scene, data obtained by sensing a target object by a radar corresponds to a sensing result in a local coordinate system, and in order to apply the sensing data of the radar to a global coordinate system, the radar needs to be calibrated. Some traditional radar calibration methods are not suitable for radar calibration in the scene of vehicle-infrastructure cooperation, so that how to accurately calibrate a radar in the scene of vehicle-infrastructure cooperation has become a problem to be solved.

**SUMMARY**

The present disclosure provides a radar calibration method and apparatus, an electronic device, a roadside device, a storage medium and a computer program product.
An aspect of the present disclosure provides a radar calibration method, including:

acquiring reference position information respectively corresponding to M reference objects collected by a radar in a coordinate system of the radar within a preset time length, wherein M is an integer greater than or equal to 1;
determining N pieces of track information based on the reference position information respectively corresponding to the M reference objects, wherein N is an integer greater than or equal to 1; and
determining a calibration parameter of the radar based on the N pieces of track information and relevant information of a high-precision map, wherein the calibration parameter of the radar is used for representing a transformation relation between the coordinate system of the radar and a target coordinate system.

Another aspect of the present disclosure provides a radar calibration apparatus, including:

a radar data acquisition module configured for acquiring reference position information respectively corresponding to M reference objects collected by a radar in a coordinate system of the radar within a preset time length, wherein M is an integer greater than or equal to 1;
a data processing module configured for determining N pieces of track information based on the reference position information respectively corresponding to the M reference objects, wherein N is an integer greater than or equal to 1; and
a calibration parameter determination module for determining a calibration parameter of the radar based on the N pieces of track information and relevant information of a high-precision map, wherein the calibration parameter of the radar is used for representing a transformation relation between the coordinate system of the radar and a target coordinate system.

Another aspect of the present disclosure provides an electronic device, including:

at least one processor; and
a memory communicatively connected to the at least one processor, wherein
the memory stores instructions executable by the at least one processor which, when executed by the at least one processor, enable the at least one processor to perform the radar calibration method provided by any of the embodiments herein.

Another aspect of the present disclosure provides a non-transitory computer-readable storage medium storing computer instructions, wherein the computer instructions, when executed by a computer, cause the computer to perform the radar calibration method provided by any of the embodiments of the present disclosure.
Another aspect of the present disclosure provides a computer program product including a computer program which, when executed by a processor, causes the processor to perform the radar calibration method described above.
Another aspect of the present disclosure provides a roadside device including the electronic device as previously described.
According to the technical solution of the present disclosure, a calibration parameter of a radar can be determined by acquiring reference position information of M reference objects in combination with relevant information of a high-precision map. Due to the fact that the calibration parameter of the radar is determined by adopting the data sensed by the radar in real time and the corresponding relevant information of the high-precision map, a calibration processing method for a radar in the scene of vehicle-infrastructure cooperation is provided, data sensed by the radar can be used in cooperation with data collected by other data acquisition devices, and the processing efficiency and the data accuracy in the scene of vehicle-infrastructure cooperation are further guaranteed.

It is to be understood that the description in this section is not intended to identify key or critical features of the embodiments of the present disclosure, nor is it intended to limit the scope of the present disclosure. Other features of the present disclosure will become readily comprehensible from the following description.

## BRIEF DESCRIPTION OF THE DRAWINGS

The drawings are included to provide a better understanding of the present disclosure and are not to be construed as limiting the present disclosure, in which:

FIG. 1 is a schematic flowchart showing a radar calibration method according to an embodiment of the present disclosure;
FIG. 2 is a schematic diagram showing a radar detection range according to an embodiment of the present disclosure;
FIG. 3 is a schematic diagram I showing track information for a radar calibration method according to another embodiment of the present disclosure;
FIG. 4 is a schematic diagram II showing track information for a radar calibration method according to another embodiment of the present disclosure;
FIG. 5 is a schematic structural view showing a radar calibration apparatus according to an embodiment of the present disclosure; and
FIG. 6 is a block diagram of an electronic device used to implement the radar calibration method according to an embodiment of the present disclosure.

## DETAILED DESCRIPTION

The following describes exemplary embodiments of the present disclosure with reference to the accompanying drawings, which include various details of the embodiments of the present disclosure to facilitate understanding, and should be considered as merely exemplary. Accordingly, one of ordinary skills in the art appreciates that various changes and modifications can be made to the embodiments described herein without departing from the scope and spirit of the present disclosure. Similarly, descriptions of well-known functions and structures are omitted from the following description for clarity and conciseness.

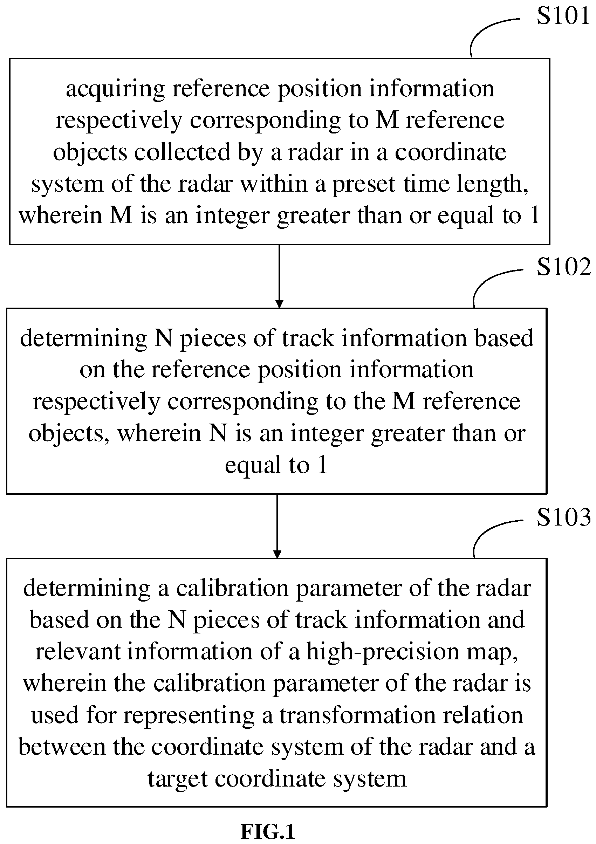

An embodiment of the present disclosure provides a radar calibration method, as shown in FIG. 1, the method includes:

S 101: acquiring reference position information respectively corresponding to M reference objects collected by a radar in a coordinate system of the radar within a preset time length, wherein M is an integer greater than or equal to 1;
S102: determining N pieces of track information based on the reference position information respectively corresponding to the M reference objects, wherein N is an integer greater than or equal to 1; and
S103: determining a calibration parameter of the radar based on the N pieces of track information and relevant information of a high-precision map, wherein the calibration parameter of the radar is used for representing a transformation relation between the coordinate system of the radar and a target coordinate system.

The embodiment may be applicable to an electronic device. The electronic device may be any one of a server and a terminal device or the like, which is within the scope of protection of the embodiment as long as the data processing function is provided.

The radar may be a radar mounted at a roadside, such as a radar mounted on a pole constructed at a roadside, or may be mounted at other positions, such as a wall of a high-rise building at a roadside, etc., and the embodiment is not intended to be exhaustive in mounting positions of the radar.

The radar may specifically be a millimeter wave radar.

The preset time length may be set according to actual conditions, for example, 10 minutes, 20 minutes, etc.

The position of the radar may be different according to different actual construction conditions; and the M reference objects may be M reference objects detected by the radar within a detection range of the radar and within the preset time length.

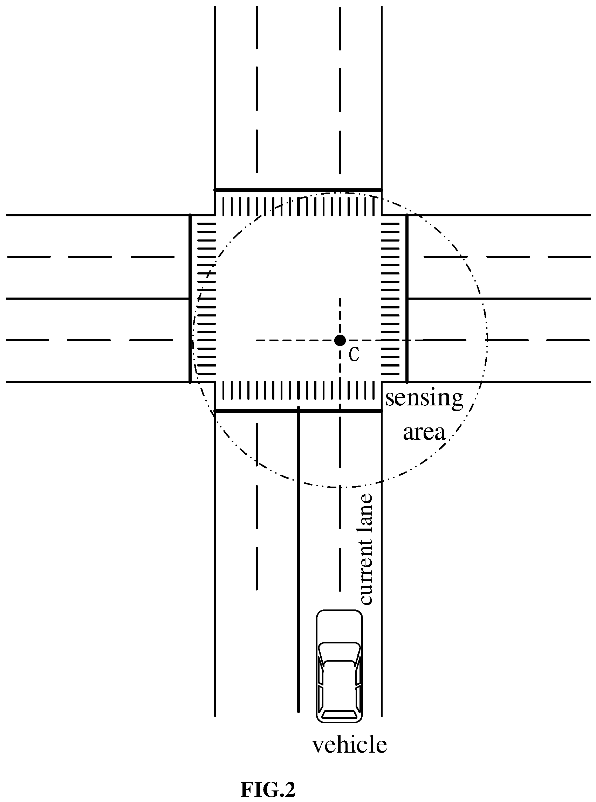

The M reference objects may be M reference objects detectable within the detection range of the radar to be calibrated, as shown in FIG. 2, which may be vehicles, obstacles, etc. The detection range of the radar is related to the performance of the radar itself. Specifically, the performance of a radar includes the number of probes, carrier frequency, signal form, pulse repetition frequency, pulse width, modulation coefficient and the like. For example, the larger the number of the probes, the smaller the detection blind area and the larger the detection range; while the higher the carrier frequency, the smaller the corresponding wavelength and the smaller the detection range.

The radar may determine reference position information of each reference object of the M reference objects by transmitting radio waves and receiving echoes.

Among the M reference objects, reference position information corresponding to each reference object may be plural. Due to the fact that the radar has a certain signal transmitting frequency, namely there may be a certain time interval between two times of radio wave transmissions. On this basis, the radar may send radio waves within the preset time length multiple times, and each time the radio waves are sent, reference position information corresponding to one or more reference objects may be determined based on the echoes of the radio waves. It is to be understood that the M reference objects may not be detected all the time within the preset time length. For example, assuming that radio waves are transmitted 20 times at a certain time interval within the preset time length, and corresponding echoes are received 20 times, 10 pieces of reference position information corresponding to reference object 1, reference object 2 and reference object 3, respectively, may be determined based on the 1st to 10th echoes. 10 pieces of reference position information corresponding to the reference object 3 and reference object 4 respectively may be determined based on the 11th to 20th echoes. Finally, a plurality of pieces of reference position information corresponding to the 4 reference objects may be determined within the preset time length.

Determining the N pieces of track information based on the reference position information respectively corresponding to the M reference objects may include constructing track information corresponding to each reference object based on a plurality of pieces of reference position information corresponding to each reference object in the M reference objects.

The above N may be equal to M, and each of both is an integer greater than or equal to 1. Alternatively, N may be less than M.

In a case where N is equal to M, one track information may be constructed based on a plurality of pieces of reference position information of each reference object of the M reference objects, and finally M pieces of track information are obtained.

In a case where N is less than M, a corresponding candidate track information may be constructed based on a plurality of pieces of reference position information of each reference object of the M reference objects, a part of candidate track information is filtered from M pieces of candidate track information, and finally N pieces of track information may be obtained.

Determining the calibration parameter of the radar based on the N pieces of track information and the relevant information of the high-precision map, wherein the calibration parameter of the radar is used for representing the transformation relation between the coordinate system of the radar and the target coordinate system, specifically includes: determining the calibration parameter of the radar based on the N pieces of track information and lane centerlines of the high-precision map corresponding to the N pieces of track information.

The calibration parameter of the radar may include a rotation matrix and a translation matrix. The calibration parameter of the radar may transform position information, detected or probed by the radar, in a coordinate system of the radar to a target coordinate system through the rotation matrix and the translation matrix. Here, the target coordinate system may be a coordinate system which is uniformly used by devices in all vehicle-infrastructure cooperative scenes. Alternatively, the target coordinate system may be a coordinate system of a high-precision map, or a coordinate system used for a high-precision map, such as a geodetic coordinate system.

In this way, the calibration parameter of the radar may be determined by acquiring the reference position information of M reference objects and the relevant information of the high-precision map. Due to the fact that the calibration parameter of the radar is determined by adopting data sensed by the radar in real time and in combination with the corresponding relevant information of the high-precision map, the accuracy of the calibration of the radar can be guaranteed, and finally it can be guaranteed that the radar is used cooperatively with data collected by other data acquisition devices when the radar is applied to a vehicle-infrastructure cooperative scene, and the processing efficiency and the processing accuracy under the vehicle-infrastructure cooperative scene are further guaranteed.

Determining N pieces of track information based on the reference position information respectively corresponding to the M reference objects, includes:
generating M pieces of candidate track information based on the reference position information respectively corresponding to the M reference objects; and filtering the M pieces of candidate track information to obtain the N pieces of track information.

Generating the M pieces of candidate track information based on the reference position information respectively corresponding to the M reference objects may specifically include: arranging and connecting a plurality of pieces of reference position information of each reference object of the M reference objects according to a time sequence to obtain candidate track information corresponding to each reference object.

It has been explained previously that one or more pieces of reference position information corresponding to each reference object of the M reference objects may be sequentially acquired at a certain time interval within a preset time length, namely, each piece of reference position information may also correspond to a time value or a time stamp. In a case that track information corresponding to each reference object is constructed, a plurality of pieces of reference position information of each reference object may be arranged and connected according to a time sequence to obtain candidate track information corresponding to each reference object.

The M pieces of candidate track information are not necessarily all available, and thus the candidate track information may be filtered according to a certain rule, and remained candidate track information is used as the N pieces of track information, wherein N may be less than or equal to M.

Filtering the M pieces of candidate track information may be performed based on at least one of the following ways.

It is determined whether a length of a track indicated by any candidate track information in the M pieces of candidate track information is greater than a preset length threshold value or not, if so, remaining the candidate track information, otherwise, deleting the candidate track information, wherein the preset length threshold value may be set according to actual conditions, such as 50 meters.

It is determined whether a track indicated by any candidate track information of the M pieces of candidate track information is close to a straight line or not, if so, remaining the candidate track information, otherwise, deleting the candidate track information. Determining whether a track indicated by any candidate track information is close to a straight line or not may include determining whether a track indicated by a part of a piece of candidate track information which is larger than a preset proportion is a straight line, if so, the candidate track information may be considered to be close to a straight line, wherein the preset proportion may be set according to actual conditions, such as 80% or 90% and the like.

It is determined whether the similarity between a track indicated by any candidate track information of the M pieces of candidate track information and a lane centerline in a high-precision map at a corresponding position is greater than a similarity threshold value or not, if so, remaining the candidate track information, otherwise, deleting the candidate track information, wherein, the similarity threshold value may be set according to actual conditions, such as 95%, or more or less, which are all within the scope of the present embodiment.

In this way, some track information in extreme conditions in M pieces of candidate track information may be deleted, and N pieces of track information with higher reliability may be obtained through filtering and thus used as a basis for calculation, so that the interference caused by noise data is eliminated, and the subsequent calculation of calibration parameters is more precise and accurate.

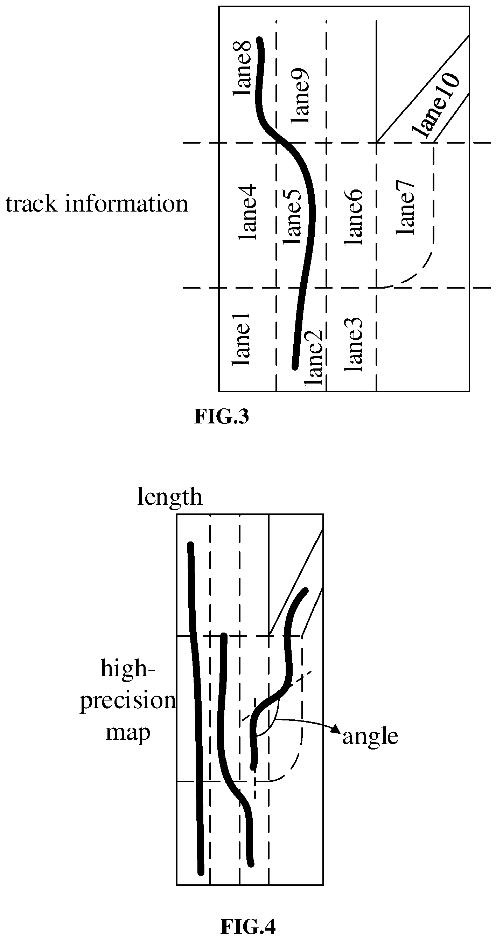

As shown in FIG. 3, based on priori information, if a vehicle is driving normatively, there is a great probability that a track of the vehicle will be similar to a lane centerline in the high-precision map (for example, the similarity being greater than 80%), namely, the vehicle is driving near the lane centerline. Therefore, whether candidate track information is remained or not may be determined by identifying whether tracks indicated by the M pieces of candidate track information appear on a lane centerline or not or whether there is a certain similarity with a lane centerline in the high-precision map. In the embodiment, an exemplary processing way of filtering the M pieces of candidate track information to obtain the N pieces of track information may include:

determining score values respectively corresponding to the M pieces of candidate track information based on a similarity between tracks indicated by the M pieces of candidate track information and lane centerlines in the high-precision map respectively; and selecting the N pieces of track information with a score value greater than a preset threshold value from the M pieces of candidate track information.

Namely, score value calculation is performed on the M pieces of candidate track information, candidate track information having a score value greater than the preset threshold value is remained, and the remaining candidate track information is deleted.

Here, processing may be performed by a preset formula. For example, M pieces of candidate track information may be input into a preset formula which uses a scoring mechanism calculation formula in combination with the preset threshold value, and the N pieces of track information output by the preset formula may be directly obtained. The preset formula may be expressed as follows:

$$\text{remain}_{\text{traces}} = score(\mathcal{G}\{trace_{set}\})$$

wherein remain$_{\text{traces}}$ the N pieces of track information which are remained, score() is the scoring mechanism calculation formula . It is to be understood that although the formula only shows that the scoring mechanism calculation formula score() only contains a function $\mathcal{G}$ {*}, in actual processing, the score() further includes the preset threshold value (or a threshold), and the preset threshold value may be expressed as Ttrace; $\mathcal{G}$ $\mathcal{G}$ {*} is an estimation classification strategy;

*trace*$_{set}$ represents the M pieces of candidate track information.

The specific processing for the preset formula may include: inputting the M pieces of candidate track information into $\mathcal{G} \mathcal{G}$ {*}, and processing the M pieces of candidate track information according to a corresponding classification strategy via $\mathcal{G} \mathcal{G}$ {*}. The processing of $\mathcal{G}$ {*} may include performing classification according to geometric attributes, linear relations, track relations, etc. of the M pieces of candidate track information. As shown in FIG. 4, after the M pieces of candidate track information are classified, the track information may be divided into a straight track, a left turning track, a right turning track, a left lane changing track, a right lane changing track and the like. The classified track information is scored by adopting the scoring mechanism calculation formula score(). The specific scoring mechanism may be adjusted according to the requirements of an actual application scene. For example, for a straight track, scoring may be performed based on the length of the straight track, and if a track indicated by one candidate track information of M pieces of candidate track information is longer, the corresponding score value is higher. Scoring may also be performed based on an angle between a straight track and a lane line. If a track indicated by one candidate track information of the M pieces of candidate track information is parallel to the lane line, the corresponding score value is higher, and if the angle between a track indicated by one candidate track information of the M pieces of candidate track information and the lane line is larger, the corresponding score value is lower. For a left turning track or a right turning track, scoring may be performed based on a relation between an arc of a track and an arc of a lane centerline in the high-precision map at a corresponding position. The closer the above two arcs are, the higher the score value is, and otherwise the lower the score value is. Other scoring mechanisms are not described in detail. The scoring mechanism calculation formula score() may also compare the score values of the M pieces of candidate track information with a preset threshold value, candidate track information with a score value larger than the threshold value is remained, and the rest is deleted. Here, the setting of the preset threshold value may be adjusted according to actual conditions, and if the preset threshold value is larger, the quality of the filtered N pieces of track information data is higher, but the data volume is smaller; and if the preset threshold value is smaller, the quality of the filtered data is lower, but the data volume is larger.

In this way, by classifying the M pieces of track information based on the classification strategy and comparing the similarity between tracks indicated by the M pieces of track information and the lane centerlines in the high-precision map, the M pieces of track information can be filtered more precisely, and the accuracy of calculation of calibration parameters is further improved.

Based on the above processing, part of candidate track information may be deleted from M pieces of candidate track information, candidate track information in which a track indicated is similar to a track of a lane centerline is remained, and the remained candidate track information is used as N pieces of track information to calibrate the radar. Determining a calibration parameter of the radar based on the N pieces of track information and relevant information of a high-precision map includes:

calculating with K groups of candidate calibration parameters respectively to obtain K results based on the N pieces of track information and lane centerlines in the high-precision map respectively corresponding to the N pieces of track information; and taking a candidate calibration parameter corresponding to a minimum value in the K results as the calibration parameter of the radar, wherein k is an integer greater than or equal to 2.

The generation mode of the K groups of candidate calibration parameters may include obtaining k combinations of track information by combining the N pieces of track information, and performing calculation based on the K combinations of track information respectively to obtain the K groups of candidate calibration parameters.

Obtaining the K combinations of track information by combining the N pieces of track information may include combining any two pieces of track information, combining any three pieces of track information, combining any four pieces of track information of the N pieces of track information, up to combining any N pieces of track information, and finally K combinations of track information may be obtained.

Performing calculation based on the K combinations of track information respectively to obtain the K groups of candidate calibration parameters may include performing calculation based on the h-th combination of track information in the K combinations of track information to obtain an h-th group of candidate calibration parameters, wherein h is an integer greater than or equal to 1 and less than or equal to K.

Here, the h-th combination of track information may be any one of the K combinations of track information, namely, a candidate calibration parameter corresponding to each combination of track information is finally obtained by adopting the same processing mode based on each combination of track information, the detailed description is omitted.

Through the solution described above, K combinations of tracks may be obtained by permutation and combination based on N pieces of track information, and then an optimal solution of radar calibration parameter may be obtained through calculation of K groups of candidate calibration parameters corresponding to the K combinations of tracks, N pieces of track information and lane centerline information. Therefore, by traversing various combinations among the N pieces of track information, a large number of track relations with different geometric attributes may be obtained, the accuracy of the calibration parameter of the radar finally determined is further ensured, and the problem of low calculation reliability caused by less data volume is avoided.

As to the calculation manner for each result of the K results, the following is explained. Calculating with the K groups of candidate calibration parameters respectively to obtain the K results based on the N pieces of track information and the lane centerlines in the high-precision map respectively corresponding to the N pieces of track information includes: determining remained track points respectively corresponding to the N pieces of track information based on a similar probability between tracks indicated by the N pieces of track information and the corresponding lane centerlines in the high-precision map respectively; and performing calculation based on the remained track points respectively corresponding to the N pieces of track information, the lane centerlines in the high-precision map respectively corresponding to the N pieces of track information and a j-th group of candidate calibration parameters in the K groups of candidate calibration parameters to obtain a j-th result, wherein j is an integer greater than or equal to 1 and less than or equal to K.

K groups of candidate calibration parameters are obtained above, traversal calculation is carried out on the K groups of candidate calibration parameters based on N pieces of track information and lane centerlines in the high-precision map corresponding to the N pieces of track information, and a group of candidate calibration parameters which enable the final result to be minimum is selected from the K groups of candidate calibration parameters as the final calibration parameters of the radar in the embodiment.

It is to be noted that the processing of calculating and obtaining any result of the K results is the same as the processing of the j-th result described above, which is not described in details.

As stated above, the remained track points respectively corresponding to the N pieces of track information are determined based on a similar probability between tracks indicated by the N pieces of track information and the corresponding lane centerlines in the high-precision map respectively. Calculation is performed based on the remained track points respectively corresponding to the N pieces of track information, the lane centerlines in the high-precision map respectively corresponding to the N pieces of track information and a j-th group of candidate calibration parameters in the K groups of candidate calibration parameters, to obtain a j-th result.

K results determined based on the K groups of candidate calibration parameters may be finally obtained, a minimum result is selected from the K results, and a candidate calibration parameter corresponding to this result is used as the calibration parameter of the radar.

The lane centerlines in the high-precision map respectively corresponding to the N pieces of track information may be specifically a lane centerline corresponding to one piece of track information of the N pieces of track information in the high-precision map; or may be a virtual track obtained by reasoning based on a lane centerline in the high-precision map corresponding to one piece of track information of the N pieces of track information, wherein the virtual track obtained through reasoning may be one or more virtual tracks determined according to and parallel to the lane centerline in the high-precision map.

Specifically, description is made in conjunction with the following formula:

$$(R, \ T) = \mathrm{argmin} \left\{ \left\{ P \left( \sum_{i=1, \ j}^{n} trace_{radar}(i) * (R_j, T_j) - trace_{lanes}(i) \right) \right\} \right\}$$

wherein $trace_{radar}$ (i) is an i-th piece of track information in the N pieces of track information described above, $(R_j, T_j)$ is the j-th group of candidate calibration parameters in the K groups of candidate calibration parameters; $trace_{lanes}$ (i) is a lane centerline in the high-precision map corresponding to the i-th piece of track information, or may be a virtual track obtained by reasoning based on the lane centerline in the high-precision map corresponding to the i-th piece of track information; P (*) represents determining remained track points respectively corresponding to the N pieces of track information based on the similar probability between tracks indicated by the N pieces of track information and the lane centerlines in the high-precision map respectively corresponding to the N pieces of track information, namely, one or more track points on each piece of track information may be selected according to probability, which have a certain similarity with a lane track given by the high-precision map; argmin () denotes taking a group of candidate calibration parameters that minimize a final result; (R, T) represents the finally calculated calibration parameter of the radar, wherein R may be a rotation matrix and T may be a displacement vector. The specific calculation process is as follows.

Transformed track information respectively corresponding to the N pieces of track information is obtained by calculation based on the i-th piece of track information in the N pieces of track information and the j-th group of candidate calibration parameters in the K groups of candidate calibration parameters. Specifically, coordinate information of each track point of the i-th piece of track information in the radar coordinate system may be multiplied by the j-th group of candidate calibration parameters $(R_j, T_j)$ to obtain coordinate information of a series of track points in the target coordinate system. The target coordinate system may be a coordinate system of other data acquisition devices in a vehicle-infrastructure cooperative scene, such as a coordinate system of a camera or a coordinate system of a radar at other positions, or a coordinate system of a high-precision map, or a world coordinate system, which is not limited herein.

Secondly, remained track points of the transformed track information respectively corresponding to the N pieces of track information are determined based on the similar probability between tracks indicated by the N pieces of track information and the lane centerlines in the high-precision map respectively corresponding to the N pieces of track information. For example, when a lane centerline is a straight line, part of track points in N pieces of track information in the target coordinate system are selected according to a probability selection function P (*), the part of track points have a good linear relation, and part of track points at abnormal positions are removed through the probability selection function P (*). For example, a track point corresponding to an emergency lane change occurring in the course of straight-line driving for the i-th piece of track information may be removed by the probability selection function P (*).

Finally, calculation is performed based on the remained track points respectively corresponding to the N pieces of track information and the j-th group of candidate calibration parameters $(R_j, T_j)$ to obtain tracks for the N pieces of track information transformed into the target coordinate system, and difference values respectively corresponding to the N pieces of track information are obtained by calculation based on the tracks, respectively corresponding to the N pieces of track information, transformed into the target coordinate system and the lane centerlines in the high-precision map corresponding thereto. The difference values respectively corresponding to the N pieces of track information are summed to obtain a j-th result corresponding to the j-th group of candidate calibration parameters $(R_j, T_j)$. In this way, until K groups of candidate calibration parameters are traversed, K results are obtained.

The minimum result is selected from the K results based on the function argmin(), and the candidate calibration parameter corresponding to this result is taken as the calibration parameter of the radar.

The above formula may also be replaced by other cost functions, and when the cost function value is minimum, the corresponding calibration parameter of the radar is an optimal solution. The specific optimization method may be a non-linear optimization method including LM (Levenberg-Marquardt) method, gradient descent method, Newton method and the like, and the use of which specific optimization method is not limited in the present disclosure.

In this way, track information is transformed to a target coordinate system through an initial value of a calibration parameter, corresponding track points are selected based on the probability, relevant data is input into a specific formula to calculate and seek the optimal solution based on a mapping relation between the track information of a target object and lane information of the high-precision map, the calibration of parameters of a radar is automatically realized, manual participation is not needed in the calibration process, and thus the operation is simple and convenient.

An exemplary description is provided for the foregoing embodiments.

In a scene of vehicle-infrastructure cooperation, in a case that a radar (which may specifically be a millimeter wave radar) is newly mounted at some places, the radar may not be calibrated in time due to the problem of inconsistency of construction period, coordination of respective organizations and so on. At this time, only a high-precision map of a certain section of road may be given, and some basic information of a reference object (such as an obstacle), sensed by the radar may be acquired after powered on and the network is available, wherein the basic information such as position information of the reference object in a coordinate system of the radar. The embodiment needs to acquire relevant information of the high-precision map corresponding to the road section where the radar is located, such as information of lanes of the high-precision map corresponding to road section A, and the like. In addition, reference position information corresponding to M reference objects collected by the radar within a preset time length needs to be obtained

In the embodiment, reference position information respectively corresponding to M reference objects collected by the radar within a preset time length is processed through an electronic device, and finally M pieces of candidate track information are obtained. The M pieces of candidate track information are filtered to remain N pieces of track information which conforms with driving rules. Calculation is performed based on the N pieces of track information and lane centerlines in the high-precision map to finally obtain the calibration parameter of the radar.

After the calibration parameter of the radar is obtained, the method further includes:

acquiring position information of a target object collected by the radar in real time in the coordinate system of the radar, and adjusting the position information of the target object based on the calibration parameter of the radar, to obtain position information in the target coordinate system corresponding to the position information of the target object in the coordinate system of the radar.

In other words, position information of a target object collected by the radar in real time is transformed based on the calibration parameter of the radar, and finally position information in the target coordinate system corresponding to the position information of the target object in the current coordinate system of the radar may be obtained.

The target object may specifically be any one of a vehicle running on a road, a stopped vehicle, a pedestrian, an obstacle, etc. The processing for the position information of the target object collected by the radar in real time is the same as that of the above-mentioned embodiment and will not be described in detail. In addition, the position information of the target object collected by the radar is position information in the coordinate system of the radar.

In a case that a plurality of objects exist in the detection range of the radar, any one of them may be used as a target object, and transformation may be performed based on the calibration parameter of the radar to determine its corresponding position in the target coordinate system.

The target coordinate system has been described above, and will not be described in detail again. In one example, a coordinate system adopted by a high-precision map is the target coordinate system, namely, position information of a target object collected by the radar in real time in the coordinate system of the radar is collected, and the position information of the target object is adjusted based on the calibration parameter of the radar to obtain corresponding information of the target object in the high-precision map.

In this way, a corresponding calibration parameter may be determined for a radar in advance, and relevant information collected by the radar in real time may be directly transformed to a target coordinate system through the predetermined calibration parameter when the radar is actually used. Due to the adoption of the solution provided by the embodiment, calibration parameters of the radar can be more accurate. Therefore, during actual use, information collected by the radar can be more efficiently and accurately calibrated into the target coordinate system, and the accuracy and consistency of data in a whole vehicle-infrastructure cooperation scene are improved.

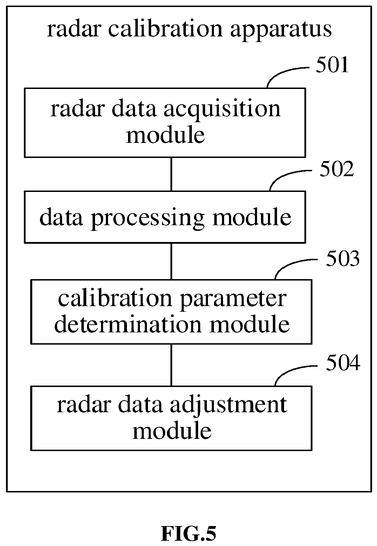

An embodiment of the present disclosure also provides a radar calibration apparatus. As shown in FIG. 5, the apparatus includes:

a radar data acquisition module 501 configured for acquiring reference position information respectively corresponding to M reference objects collected by a radar in a coordinate system of the radar within a preset time length, wherein M is an integer greater than or equal to 1;
a data processing module 502 configured for determining N pieces of track information based on the reference position information respectively corresponding to the M reference objects, wherein N is an integer greater than or equal to 1; and
a calibration parameter determination module 503 configured for determining a calibration parameter of the radar based on the N pieces of track information and relevant information of a high-precision map, wherein the calibration parameter of the radar is used for representing a transformation relation between the coordinate system of the radar and a target coordinate system.

In one embodiment, the data processing module 502 is configured for generating M pieces of candidate track information based on the reference position information respectively corresponding to the M reference objects; and filtering the M pieces of candidate track information to obtain the N pieces of track information.

In one embodiment, the data processing module 502 is configured for determining score values respectively corresponding to the M pieces of candidate track information based on a similarity between tracks indicated by the M pieces of candidate track information and lane centerlines in the high-precision map respectively; and selecting the N pieces of track information with a score value greater than a preset threshold value from the M pieces of candidate track information.

In one embodiment, the calibration parameter determination module 503 is configured for calculating with K groups of candidate calibration parameters respectively to obtain K results based on the N pieces of track information and lane centerlines in the high-precision map respectively corresponding to the N pieces of track information; and taking a candidate calibration parameter corresponding to a minimum value in the K results as the calibration parameter of the radar, wherein k is an integer greater than or equal to 2.

In one embodiment, the calibration parameter determination module 503 is configured for determining remained track points respectively corresponding to the N pieces of track information based on a similar probability between tracks indicated by the N pieces of track information and the corresponding lane centerlines in the high-precision map respectively; and performing calculation based on the remained track points respectively corresponding to the N pieces of track information, the lane centerlines in the high-precision map respectively corresponding to the N pieces of track information and a j-th group of candidate calibration parameters in the K groups of candidate calibration parameters to obtain a j-th result, wherein j is an integer greater than or equal to 1 and less than or equal to K.

In one embodiment, the apparatus further includes:
a radar data adjustment module 504 configured for acquiring position information of a target object collected by the radar in real time in the coordinate system of the radar, and adjusting the position information of the target object based on the calibration parameter of the radar, to obtain position information in the target coordinate system corresponding to the position information of the target object in the coordinate system of the radar.

The radar calibration apparatus provided by the embodiment of the present disclosure can implement the radar calibration method provided by the embodiment of the present disclosure, and has corresponding beneficial effects.

In accordance with embodiments of the present disclosure, the present disclosure also provides an electronic device, a readable storage medium, and a computer program product.

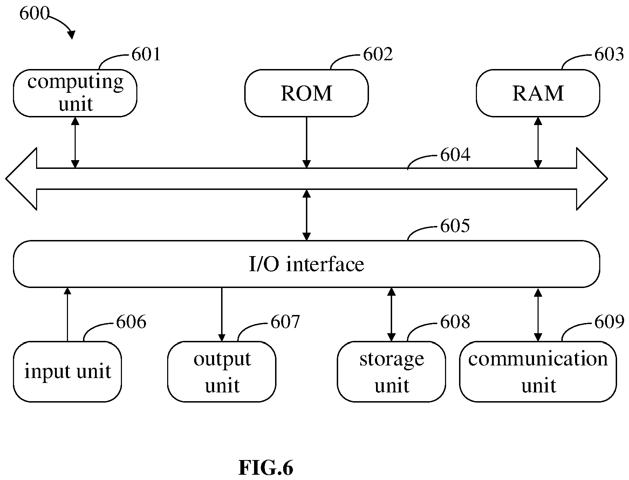

FIG. 6 illustrates a schematic block diagram of an exemplary electronic device 600 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processors, cellular telephones, smart phones, wearable devices, and other similar computing devices. The components their connections and relations, and their functions are shown herein by way of example only and are not intended to limit the implementations of the present disclosure described and/or claimed herein.

As shown in FIG. 6, the device 600 includes a computing unit 601 that may perform various suitable actions and processes in accordance with a computer program stored in a read only memory (ROM) 602 or a computer program loaded from a storage unit 608 into a random access memory (RAM) 603. In the RAM 603, various programs and data required for the operation of the device 600 may also be stored. The computing unit 601, the ROM 602 and the RAM 603 are connected to each other via a bus 604. An input output (I/O) interface 605 is also connected to bus 604.

A plurality of components in device 600 are connected to I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices over a computer network, such as the Internet, and/or various telecommunications networks.

The computing unit 601 may be a variety of general purpose and/or special purpose processing components having processing and computing capabilities. Some examples of computing unit 601 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 60 performs the various methods and processes described above, such as radar calibration methods. For example, in some embodiments, the radar calibration method may be implemented as a computer software program tangibly embodied in a machine-readable medium, such as storage unit 608. In some embodiments, part or all of the computer program may be loaded and/or installed on the device 600 via the ROM 602 and/or the communication unit 609. When a computer program is loaded into the RAM 603 and executed by the computing unit 601, one or more steps of the radar calibration method described above may be performed. Alternatively, in other embodiments, the computing unit 601 may be configured to perform the radar calibration method by any other suitable means (e.g., by means of firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or combinations thereof. These various embodiments may be embodied in one or more computer programs, which can be executed and/or interpreted on a programmable system including at least one programmable processor, which can be a special purpose or general-purpose programmable processor, and can receive data and instructions from, and transmit data and instructions to, a memory system, at least one input device, and at least one output device, and the at least one output device.

Program code for implementing the methods of the present disclosure may be edited in any combination of one or more programming languages. These program codes may be provided to a processor or controller of a general purpose computer, special purpose computer, or other programmable data processing device such that the program codes, when executed by the processor or controller, cause the functions/operations specified in the flowchart and/or block diagram to be performed. The program code may be executed entirely on a machine, partly on a machine, partly on a machine as a stand-alone software package and partly on a remote machine or entirely on a remote machine or server.

In the context of this disclosure, a machine-readable medium can be a tangible medium that can contain or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of a machine-readable storage medium may include electrical connections based on one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

To provide interaction with a user, the systems and techniques described herein may be implemented on a computer having: a display device (e.g., a CRT (cathode ray tube) or LCD (liquid crystal display) monitor) for displaying information to a user; and a keyboard and a pointing device (e.g., a mouse or a trackball) through which a user can provide input to the computer. Other types of devices may also be used to provide interaction with a user. For example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser, wherein a user may interact with embodiments of the systems and techniques described herein through the graphical user interface or the web browser), or in a computing system that includes any combination of such background components, middleware components, or front-end components. The components of the system may be interconnected by any form or medium of digital data communication (e.g., a communication network). Examples of communication networks include: local Area Networks (LANs), Wide Area Networks (WANs), and the Internet.

The computer system may include a client and a server. The client and server are typically remote from each other and typically interact through a communication network. The relation of the client and the server is generated by computer programs running on respective computers and having a client-server relation with each other.

The present disclosure also provides a roadside device, which may be an electronic device as previously described.

It should be understood that the steps in the various processes described above may be reordered or omitted, or other steps may be added therein. For example, the steps described in the present disclosure may be performed in parallel or sequentially or may be performed in a different order, so long as the desired result of the technical solutions disclosed in the present disclosure can be achieved, and no limitation is made herein.

Above specific embodiments do not constitute a limitation on the protection scope of the present disclosure. It should be understood by those skilled in the art that various modifications, combinations, sub-combinations, and substitutions may be available according to design requirements and other factors. Any modifications, equivalent replacements and improvements made within the spirit and principle of the present disclosure shall be covered within the protection scope of the present disclosure.

**Claims**

1. A radar calibration method, comprising:

   acquiring (S101) reference position information respectively corresponding to M reference objects collected by a radar in a coordinate system of the radar within a preset time length, wherein M is an integer greater than or equal to 1;
   determining (S102) N pieces of track information based on the reference position information respectively corresponding to the M reference objects, wherein N is an integer greater than or equal to 1; and
   determining (S103) a calibration parameter of the radar based on the N pieces of track information and relevant information of a high-precision map, wherein the calibration parameter of the radar is used for representing a transformation relation between the coordinate system of the radar and a target coordinate system.

2. The radar calibration method according to claim 1, wherein determining the N pieces of track information based on the reference position information respectively corresponding to the M reference objects, comprises:

   generating M pieces of candidate track information based on the reference position information respectively corresponding to the M reference objects; and
   filtering the M pieces of candidate track information to obtain the N pieces of track information.

3. The radar calibration method according to claim 2, wherein filtering the M pieces of candidate track information to obtain the N pieces of track information, comprises:

   determining score values respectively corresponding to the M pieces of candidate track information based on a similarity between tracks indicated by the M pieces of candidate track information and lane centerlines in the high-precision map respectively; and
   selecting the N pieces of track information with a score value greater than a preset threshold value from the M pieces of candidate track information.

4. The radar calibration method according to any one of claims 1-3, wherein determining the calibration parameter of the radar based on the N pieces of track information and the relevant information of the high-precision map, comprises:

calculating with K groups of candidate calibration parameters respectively to obtain K results based on the N pieces of track information and lane centerlines in the high-precision map respectively corresponding to the N pieces of track information; and

taking a candidate calibration parameter corresponding to a minimum value in the K results as the calibration parameter of the radar, wherein k is an integer greater than or equal to 2.

5. The radar calibration method according to claim 4, wherein calculating with the K groups of candidate calibration parameters respectively to obtain the K results based on the N pieces of track information and the lane centerlines in the high-precision map respectively corresponding to the N pieces of track information, comprises:

determining remained track points respectively corresponding to the N pieces of track information based on a similar probability between tracks indicated by the N pieces of track information and the corresponding lane centerlines in the high-precision map respectively;

performing calculation based on the remained track points respectively corresponding to the N pieces of track information, the lane centerlines in the high-precision map respectively corresponding to the N pieces of track information and a j-th group of candidate calibration parameters in the K groups of candidate calibration parameters to obtain a j-th result, wherein j is an integer greater than or equal to 1 and less than or equal to K.

6. The radar calibration method according to any one of claims 1-5, wherein the method further comprises:

acquiring position information of a target object collected by the radar in real time in the coordinate system of the radar, and

adjusting the position information of the target object based on the calibration parameter of the radar, to obtain position information in the target coordinate system corresponding to the position information of the target object in the coordinate system of the radar.

7. A radar calibration apparatus, comprising:

a radar data acquisition module (501) configured for acquiring reference position information respectively corresponding to M reference objects collected by a radar in a coordinate system of the radar within a preset time length, wherein M is an integer greater than or equal to 1;

a data processing module (502) configured for determining N pieces of track information based on the reference position information respectively corresponding to the M reference objects, wherein N is an integer greater than or equal to 1; and

a calibration parameter determination module (503) configured for determining a calibration parameter of the radar based on the N pieces of track information and relevant information of a high-precision map, wherein the calibration parameter of the radar is used for representing a transformation relation between the coordinate system of the radar and a target coordinate system.

8. The radar calibration apparatus according to claim 7, wherein the data processing module (502) is configured for generating M pieces of candidate track information based on the reference position information respectively corresponding to the M reference objects; and

filtering the M pieces of candidate track information to obtain the N pieces of track information.

9. The radar calibration apparatus according to claim 8, wherein the data processing module (502) is configured for determining score values respectively corresponding to the M pieces of candidate track information based on a similarity between the M pieces of candidate track information and lane centerlines in the high-precision map respectively; and

selecting the N pieces of track information with a score value greater than a preset threshold value from the M pieces of candidate track information.

10. The radar calibration apparatus according to any one of claims 7-9, wherein the calibration parameter determination module (503) is configured for calculating with K groups of candidate calibration parameters respectively to obtain K results based on the N pieces of track information and lane centerlines in the high-precision map respectively corresponding to the N pieces of track information; and

taking a candidate calibration parameter corresponding to a minimum value in the K results as the calibration parameter of the radar, wherein k is an integer greater than or equal to 2.

**11.** The radar calibration apparatus according to claim 10, wherein the calibration parameter determination module (503) is configured for determining remained track points respectively corresponding to the N pieces of track information based on a similar probability between the N pieces of track information and the corresponding lane centerlines in the high-precision map respectively; and

performing calculation based on the remained track points respectively corresponding to the N pieces of track information, the lane centerlines in the high-precision map respectively corresponding to the N pieces of track information and a j-th group of candidate calibration parameters in the K groups of candidate calibration parameters to obtain a j-th result, wherein j is an integer greater than or equal to 1 and less than or equal to K.

**12.** The radar calibration apparatus according to any one of claims 7-11, further comprising:
a radar data adjustment module (504) configured for acquiring position information of a target object collected by the radar in real time in the coordinate system of the radar, and adjusting the position information of the target object based on the calibration parameter of the radar, to obtain position information in the target coordinate system corresponding to the position information of the target object in the coordinate system of the radar.

**13.** A non-transitory computer-readable storage medium storing computer instructions, wherein the computer instructions, when executed by a computer, cause the computer to perform the radar calibration method of any one of claims 1-6.

**14.** A computer program product comprising a computer program which, when executed by a processor, causes the processor to perform the radar calibration method of any one of claims 1-6.

S101

acquiring reference position information respectively corresponding to M reference objects collected by a radar in a coordinate system of the radar within a preset time length, wherein M is an integer greater than or equal to 1

S102

determining N pieces of track information based on the reference position information respectively corresponding to the M reference objects, wherein N is an integer greater than or equal to 1

S103

determining a calibration parameter of the radar based on the N pieces of track information and relevant information of a high-precision map, wherein the calibration parameter of the radar is used for representing a transformation relation between the coordinate system of the radar and a target coordinate system

FIG.1

sensing area

current lane

vehicle

**FIG.2**

track information

FIG.3

length

high-precision map

angle

FIG.4

radar calibration apparatus

501

radar data acquisition
module

502

data processing module

503

calibration parameter
determination module

504

radar data adjustment
module

FIG.5

600

601
computing
unit

602
ROM

603
RAM

604

605
I/O interface

606
input unit

607
output
unit

608
storage
unit

609
communication
unit

**FIG.6**